# EUROPEAN PATENT APPLICATION

(11) **EP 4 840 287 A1**
(43) Date of publication of application: **18.11.2026**
(21) Application number: 26169366.7
(22) Date of filing: 31.03.2026
(51) Int. Cl.: A01D 41/14

(54) **WORK METHOD, WORK SYSTEM, AND PROGRAM**

(30) Priority: 14.05.2025 JP 2025080992; 28.01.2026 JP 2026012552
(71) Applicant: Yanmar Holdings Co., Ltd., Osaka (JP)
(72) Inventor: LEE, Seungkyu, Okayama (JP)
(74) Representative: Isarpatent

(57) **Abstract**

[Problem]

Provided is a technique suitable for harvest work of crops by a work vehicle.

[Solution]

An exemplary work method is a work method for performing harvest work by a work vehicle, including executing automatic setting of a target height at the time of lowering a work machine that performs the harvest work from a non-work position to a work position on the basis of crop information that is information regarding a crop subjected to the harvest work, area information that is information on an area set in a field in which the harvest work is performed, or route information that is information on a route set in the field.

## Description

### TECHNICAL FIELD

The present invention relates to a work method, a work system, and a program.

### BACKGROUND ART

Conventionally, there has been known a technique of causing a combine harvester to perform automatic reaping travel along a work route generated in a work area (see, for example, Patent Document 1). At the time of starting the automatic reaping travel, a reaping part of the combine harvester is lowered from a non-work position and set at a work position.

### PRIOR ART DOCUMENT

### PATENT DOCUMENT

Patent Document 1: JP-A-2023-56268

### SUMMARY OF INVENTION

### TECHNICAL PROBLEM

Before the automatic reaping travel is started, an operator manually sets the work position, and at the time of starting the automatic reaping travel, the reaping part is automatically lowered from the non-work position to the manually set work position. Such manual setting leads to an increase in work load and a decrease in work efficiency, and thus there is room for improvement. On the other hand, in a simple automatic setting of the work position, the reaping work may not be appropriately performed.

In view of the above points, an object of the present invention is to provide a technique suitable for harvest work of crops by a work vehicle.

### SOLUTION TO PROBLEM

An exemplary work method of the present invention is a work method for performing harvest work by a work vehicle, including executing automatic setting of a target height at the time of lowering a work machine that performs the harvest work from a non-work position to a work position on the basis of crop information that is information regarding a crop subjected to the harvest work, area information that is information on an area set in a field in which the harvest work is performed, or route information that is information on a route set in the field.

In addition, an exemplary work system of the present invention includes: a work vehicle including a work machine that performs harvest work; and a control device that controls the work machine, in which the control device sets a target height at the time of lowering the work machine from a non-work position to a work position on the basis of crop information that is information regarding a crop subjected to the harvest work, area information that is information on an area set in a field in which the harvest work is performed, or route information that is information on a route set in the field.

In addition, an exemplary program of the present invention is a program for causing a computer to execute a work method for performing harvest work by a work vehicle, and the program causes the computer to function as means for executing setting of a target height at the time of lowering a work machine that performs the harvest work from a non-work position to a work position on the basis of crop information that is information regarding a crop subjected to the harvest work, area information that is information on an area set in a field in which the harvest work is performed, or route information that is information on a route set in the field.

### ADVANTAGEOUS EFFECTS OF INVENTION

According to the exemplary present invention, it is possible to provide a technique suitable for harvest work of crops by a work vehicle.

### BRIEF DESCRIPTION OF DRAWINGS

Fig. 1 is a diagram illustrating a schematic configuration of a work system;
Fig. 2 is a side view illustrating a schematic configuration of a combine harvester;
Fig. 3 is a plan view illustrating a schematic configuration of the combine harvester;
Fig. 4 is a view for describing a lifting and lowering operation of a reaping part;
Fig. 5 is a block diagram illustrating a schematic configuration of a control device;
Fig. 6 is a diagram illustrating an outline of a travel route generated by a route generating part;
Fig. 7 is a flowchart illustrating a flow of harvest work by automatic travel executed in the work system;
Fig. 8 is a flowchart illustrating a flow of processing executed in the work system and related to height setting of the reaping part;
Fig. 9 is a diagram schematically illustrating work performance information;
Fig. 10 is a diagram for describing an area and a route set in a field in a modification;
Fig. 11 is a table in which a name of an area is associated with a target height;
Fig. 12 is a table in which a name of a route pattern is associated with the target height;
Fig. 13 is a diagram for describing information regarding the work route; and
Fig. 14 is a table in which the name of the route pattern is associated with a type of a crop.

### DESCRIPTION OF EMBODIMENTS

An embodiment of the present invention will be described with reference to the drawings. Note that, in the drawings, the same or equivalent elements are denoted by the same reference signs, and the description thereof will not be repeated in a case where there is no particular need for description.

### <1. Work system>

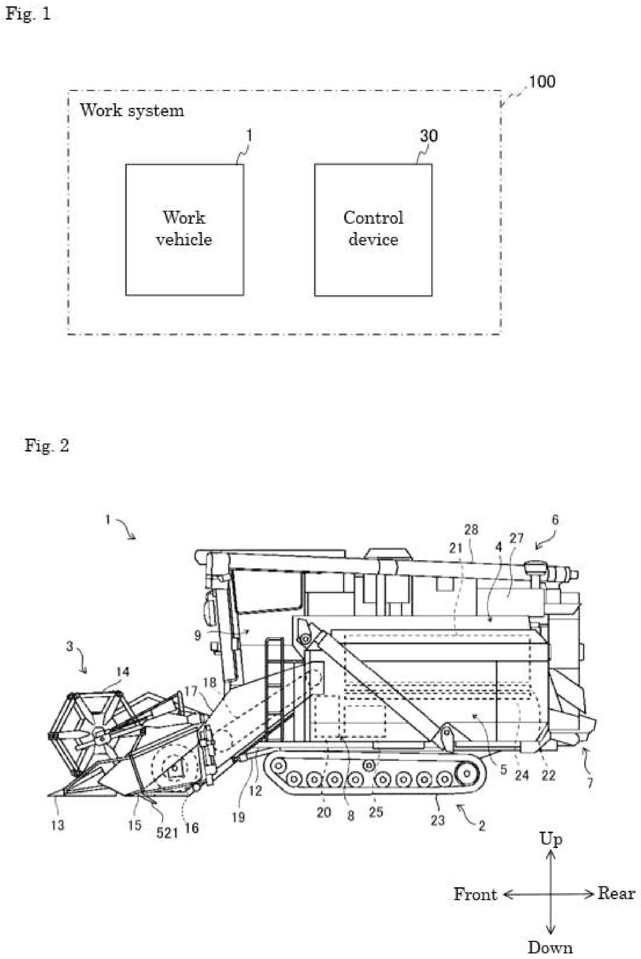

Fig. 1 is a diagram illustrating a schematic configuration of a work system 100 according to the embodiment of the present invention. As illustrated in Fig. 1, the work system 100 includes a work vehicle 1 and a control device 30. Specifically, the work system 100 is a system that causes the work vehicle 1 to perform work by automatic travel. More specifically, the work is harvest work.

Note that, in the present specification, automatic travel means that at least steering control is automatically performed by automatically performing control of a device related to travel of the work vehicle 1. The automatic travel may be configured such that, for example, at least one of shift control, braking control, and work machine control is automatically performed in addition to the steering control.

### [1-1. Work vehicle]

The work vehicle 1 is a vehicle that performs harvest work of crops, and includes a work machine that performs harvest work. In the present embodiment, the work vehicle 1 is a combine harvester. However, the work vehicle of the present invention may be other than a combine harvester, and may be, for example, a vegetable harvesting machine that harvests vegetables such as cabbage.

Hereinafter, an outline of a combine harvester 1 according to the embodiment (present embodiment) of the present invention will be described. Note that, in the description of the combine harvester 1, directions are defined as follows. First, a straight advancing direction at the time of reaping work by the combine harvester 1 is referred to as "front", and the opposite direction is referred to as "rear". In addition, in a direction from the rear to the front, a left side is referred to as "left", and a right side is referred to as "right". Furthermore, a gravity direction perpendicular to a front-rear direction and a left-right direction is defined as an up-down direction, an upstream side in the gravity direction is defined as "up", and a downstream side is defined as "down". Note that, the directions described above are names used merely for description, and are not intended to limit the actual positional relationships and directions.

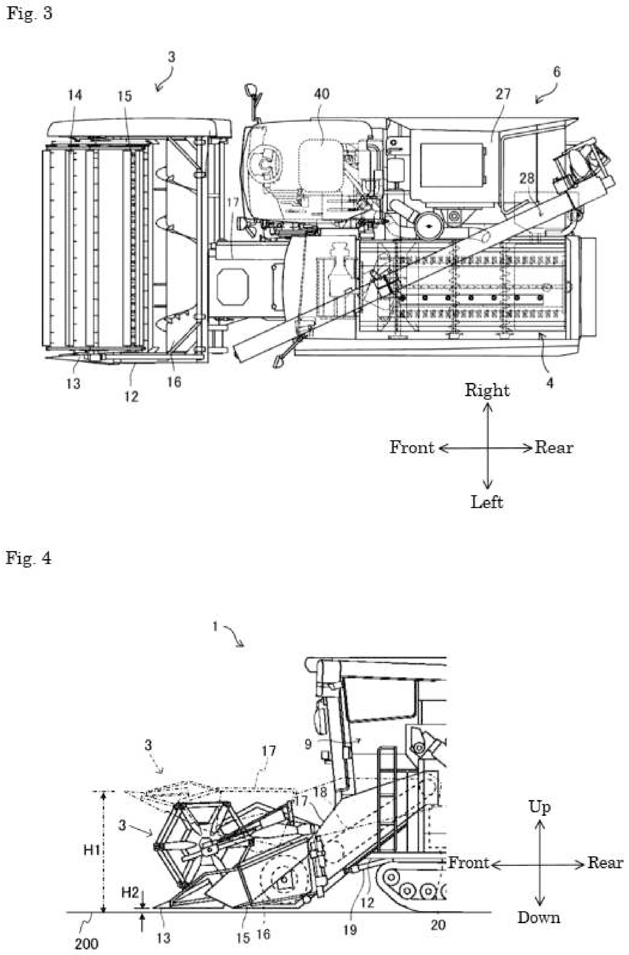

Fig. 2 is a side view illustrating a schematic configuration of the combine harvester 1 of the present embodiment. Fig. 3 is a plan view illustrating a schematic configuration of the combine harvester 1 of the present embodiment. The combine harvester 1 is specifically an ordinary combine harvester. As illustrated in Figs. 2 and 3, the combine harvester 1 includes a traveling part 2, a reaping part 3, a threshing part 4, a sorting part 5, a storing part 6, a waste straw processing part 7, a power part 8, and a steering part 9.

The combine harvester 1 travels on the traveling part 2, reaps grain stalks on the reaping part 3, threshes the reaped grain stalks in the threshing part 4, and sorts the grains in the sorting part 5 and stores the grains in the storing part 6. In addition, the combine harvester 1 processes the waste straw after threshing in the waste straw processing part 7. The combine harvester 1 drives the traveling part 2, the reaping part 3, the threshing part 4, the sorting part 5, the storing part 6, and the waste straw processing part 7, using power supplied by the power part 8.

The traveling part 2 is provided below a machine body frame 12, and includes a pair of left and right crawler-type travel devices 23 and a transmission (not illustrated). The traveling part 2 causes crawlers of the crawler-type travel devices 23 to rotate by using power (for example, rotational power) transmitted from an engine 20 of the power part 8, whereby the traveling part 2 causes the combine harvester 1 to travel in the front-rear direction or turn in the left-right direction. The transmission transmits the power (rotational power) of the power part 8 to the crawler-type travel devices 23, and can also change the speed of the rotational power.

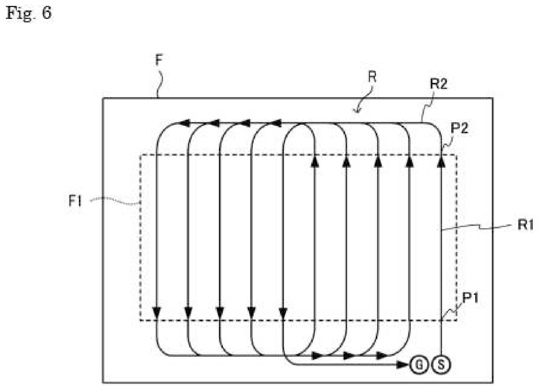

The reaping part 3 is a work machine that performs work in a field F (see Fig. 6 described later). The reaping part 3 is provided in front of the traveling part 2, and in a work area F1 (unreaped area; see Fig. 6 described later) of the field F, the reaping of the grain stalks in a predetermined reaping width is performed. Note that the reaping part 3 is an example of a work machine that performs the harvest work of the present invention.

The reaping part 3 includes a divider 13, a raking reel 14, a reaping blade 15, a raking auger 16, a feeder house 17, and a conveyance conveyor 18. In addition, the reaping part 3 also includes a rotation detection part (not illustrated) that detects the rotation speed (work speed) of a rotation operation for performing reaping work. The rotation detection part includes a rotation sensor that detects, for example, the rotation speed of the raking reel 14, the rotation speed of the raking auger 16, the rotation speed of the conveyance conveyor 18, and the like. Furthermore, the driving force of the engine 20 is transmitted to the reaping part 3 via a transmission connected to a PTO shaft (not illustrated).

The divider 13 is provided to protrude forward from a left front end and a right front end of the reaping part 3, and guides grain stalks in the unreaped area into the reaping width. The raking reel 14 is disposed in the middle in the left-right direction and behind the divider 13, and is provided to be rotatable about a rotation axis extending in the left-right direction. The raking reel 14 rakes a tip side of the grain stalk while lifting the grain stalks by rotationally driving to assist in reaping of the grain stalks guided by the divider 13. The reaping blade 15 is disposed below the raking reel 14, and cuts a base side of the grain stalk raked in by the raking reel 14 to reap the grain stalks.

The raking auger 16 is disposed behind the raking reel 14 and the reaping blade 15, and is provided to be rotatable about a rotation axis extending in the left-right direction. The raking auger 16 is driven to rotate, thereby raking the grain stalks reaped by the reaping blade 15 and conveying them rearward.

The feeder house 17 extends forward from the machine body frame 12 and is disposed behind the raking auger 16, and is supported on the machine body frame 12 to be able to be lifted and lowered. In addition, as the feeder house 17 is lifted or lowered, the divider 13, the raking reel 14, the reaping blade 15, and the raking auger 16 are lifted or lowered. That is, as the feeder house 17 is lifted or lowered, the reaping part 3 is lifted or lowered.

Note that the combine harvester 1 includes a lifting/lowering device 19, in the machine body frame 12, that lifts and lowers the feeder house 17 to lift and lower the reaping part 3, thereby lifting and lowering the reaping part 3 between a work position and a non-work position. Fig. 4 is a view for describing a lifting and lowering operation of the reaping part 3. The reaping part 3 schematically illustrated using a one-dot chain line in Fig. 4 indicates a state where the height position is in the non-work position, and the height with respect to the ground 200 (ground height) is H1. The reaping part 3 illustrated by a solid line in Fig. 4 indicates a state of being lowered from the non-work position to the work position, and the ground height is H2. The lifting/lowering device 19 includes, for example, a hydraulic cylinder or the like that is operated by receiving power from the engine 20. For example, the lifting/lowering device 19 may control a rotation angle of the reaping part 3 on the basis of a detection result of a sensor (for example, a potentiometer) provided in the reaping part 3 to lift or lower the reaping part 3.

The conveyance conveyor 18 is rotatably provided in the feeder house 17, and moves as the feeder house 17 is lifted or lowered. The conveyance conveyor 18 is driven to rotate, thereby conveying the grain stalks conveyed into the feeder house 17 by the raking auger 16 to the threshing part 4 provided further rearward.

The threshing part 4 is provided behind the feeder house 17 of the reaping part 3, and threshes the grain stalks conveyed from the feeder house 17. The threshing part 4 includes a threshing cylinder 21 and a receiving net 22. The threshing cylinder 21 threshes grains from the grain stalks conveyed from the feeder house 17, and conveys the threshed grain stalks, that is, waste straw, to the waste straw processing part 7. The receiving net 22 supports the grain stalks conveyed by the threshing cylinder 21, and sieves the grains to allow the grains to fall.

The sorting part 5 is provided below the threshing part 4. The sorting part 5 includes a swing sorting device 24, an air blow sorting device 25, a grain conveyance device (not illustrated), and a straw chip discharge device (not illustrated). The swing sorting device 24 sieves the threshed material that has fallen from the threshing part 4 to sort it into grains, straw chips, and the like. The air blow sorting device 25 further sorts the threshed material that has fallen from the threshing part 4 and the threshed material sorted by the swing sorting device 24 into grains, straw chips, and the like by blowing air. The grain conveyance device conveys the grains sorted by the swing sorting device 24 and the air blow sorting device 25 to the storing part 6. The straw chip discharge device discharges straw chips and the like other than the grains sorted by the swing sorting device 24 and the air blow sorting device 25 to the outside of the machine.

The storing part 6 is provided on a right side of the threshing part 4. The storing part 6 includes a storing tank (grain tank) 27 and a grain discharge device 28. The storing tank 27 stores the grains (harvest part) conveyed from the sorting part 5. The grain discharge device 28 includes a discharge auger and the like, performs discharge work on grains, and discharges the grains stored in the storing tank 27 onto a conveyance vehicle at a preset discharge position.

The waste straw processing part 7 is provided behind the threshing part 4. The waste straw processing part 7 includes, for example, a waste straw conveyance device (not illustrated) and a waste straw cutting device (not illustrated). The waste straw processing part 7 conveys the waste straw conveyed from the threshing part 4 to the waste straw cutting device using the waste straw conveyance device, and after being cut by the waste straw cutting device, discharges the waste straw to the rear of the combine harvester 1.

The power part 8 is provided above the traveling part 2 and below the storing part 6. The power part 8 includes the engine 20 that generates rotational power. The power part 8 transmits the rotational power generated by the engine 20 to the traveling part 2, the reaping part 3, the threshing part 4, the sorting part 5, the storing part 6, and the waste straw processing part 7. In addition, the combine harvester 1 also includes a fuel tank (not illustrated) that stores fuel to be supplied to the engine 20 of the power part 8.

The steering part 9 is provided above the power part 8. The steering part 9 is provided, around a driver's seat that is a seat 40 on which the operator sits, with operation tools for operating travel of the combine harvester 1, such as a steering wheel for providing an instruction on turning of the machine body of the combine harvester 1, a main shift lever and a sub shift lever for providing an instruction on changes in speeds of forward and rearward movements of the combine harvester 1, and the like. In addition, the steering part 9 also includes mechanisms for operating the reaping work performed by the reaping part 3, the threshing work performed by the threshing part 4, the discharge work performed by the grain discharge device 28 of the storing part 6, and the like.

### [1-2. Control device]

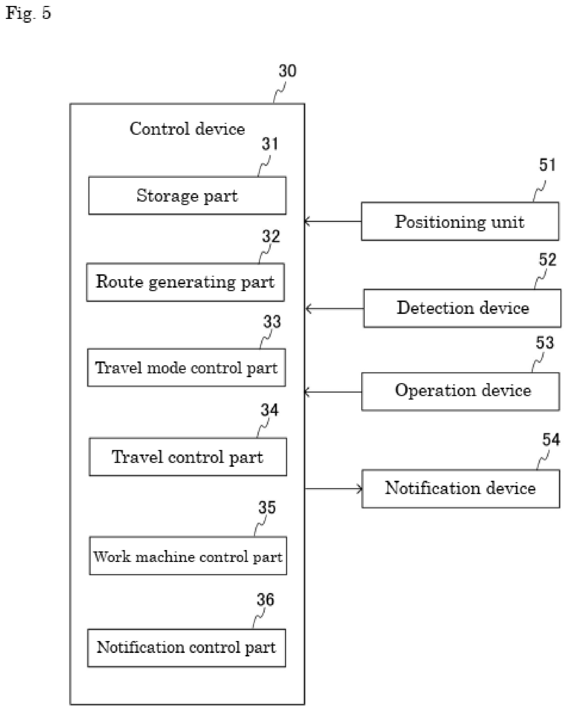

Fig. 5 is a block diagram illustrating a schematic configuration of the control device 30 according to the embodiment of the present invention. Note that Fig. 5 illustrates not only the control device 30 but also some elements 51 to 54 directly or indirectly connected to the control device 30.

The control device 30 is, for example, a computer including an arithmetic part, an input/output part, and a storage part 31. The arithmetic part is a processor, a microprocessor, or the like. The storage part 31 is a main storage device such as a read only memory (ROM) and a random access memory (RAM). The storage part 31 may further include an auxiliary storage device such as a hard disk drive (HDD) or a solid state drive (SSD). The storage part 31 stores various types of programs, data, and the like. The arithmetic part reads various types of programs from the storage part 31 and executes arithmetic processing according to the programs to implement various functions. For example, the control device 30 controls travel of the combine harvester 1. In addition, for example, the control device 30 controls the reaping part 3, which is a work machine that performs harvest work.

Note that a control program and the like for causing the control device 30 to execute automatic travel and automatic work are non-temporarily recorded in a computer-readable recording medium such as a flash ROM, an EEPROM, a CD, or a DVD, and may be read by a predetermined reading device (not illustrated) and stored in the storage part 31. In addition, the control program and the like may be downloaded from a server (not illustrated) via a communication network such as the Internet and stored in the storage part 31.

In the present embodiment, the control device 30 can be caused to function as a route generating part 32, a travel mode control part 33, a travel control part 34, a work machine control part 35, and a notification control part 36 by cooperation of the above hardware and software. The control device 30 may include one piece of hardware or may include plural pieces of hardware capable of communicating with each other.

Note that each of the functional parts 32 to 36 included in the control device 30 may be implemented by causing the arithmetic part to execute arithmetic processing according to a program as described above, that is, by software, but may be implemented by using another method. Each of the functional parts 32 to 36 may be implemented using, for example, an application specific integrated circuit (ASIC), a field programmable gate array (FPGA), or the like. That is, each of the functional parts 32 to 36 may be implemented by hardware using a dedicated IC or the like. In addition, each of the functional parts 32 to 36 may be implemented using software and hardware in combination. In addition, each of the functional parts 32 to 36 is a conceptual component. A function executed by one component may be distributed to a plurality of components. In addition, functions of a plurality of components may be integrated into one component.

The control device 30 may be provided, for example, in the combine harvester 1. In addition, for example, the control device 30 may be provided in a terminal device such as a portable communication terminal provided to be able to communicate with the combine harvester 1. The terminal device may be, for example, a tablet terminal, a smartphone, a notebook computer, a remote controller, or the like. Furthermore, for example, the control device 30 may include a control device provided in the combine harvester 1 and a control device provided in the terminal device. In addition, for example, at least a part of the functions of the control device 30 may be implemented by a server provided to be able to communicate with the combine harvester 1 or the terminal device via a network such as the Internet. In addition, for example, a part of information stored in the storage part 31 may be stored in the server.

As described above, in addition to the control device 30, the elements 51 to 54 directly or indirectly connected to the control device 30 are also illustrated in Fig. 5. These elements 51 to 54 and the control device 30 may be connected in a wired or wireless manner. In addition, as another example, these elements 51 to 54 may be connected to a device capable of communicating with the control device 30 in a wired or wireless manner, and may be indirectly connected to the control device 30 via the device. Note that these elements 51 to 54 may be included in the work system 100 of the present embodiment.

A positioning unit 51 is provided in the combine harvester 1. The positioning unit 51 acquires the position of the combine harvester 1 by using a satellite positioning system such as a global positioning system (GPS). For example, the positioning unit 51 receives a positioning signal from a positioning satellite via a positioning antenna, and acquires position information of the positioning unit 51, that is, the position of the combine harvester 1 (measurement point data), on the basis of the positioning signal. The positioning unit 51 may include a quantum compass instead of the positioning antenna.

A detection device 52 is provided in the combine harvester 1. The detection device 52 detects information related to the combine harvester 1 and outputs the detected information to the control device 30. The combine harvester 1 usually includes a plurality of types of detection devices 52. In this case, each of the plurality of types of detection devices 52 may output the detected information to the control device 30. The plurality of types of detection devices 52 may include, for example, an inertial measurement device, a surrounding situation monitoring sensor, a lifting/lowering sensor, a ground height sensor, and the like.

The inertial measurement device is, for example, a device that includes a triaxial angular velocity sensor and a triaxial acceleration sensor, and is capable of measuring an orientation of the combine harvester 1. The surrounding situation monitoring sensor is a sensor that monitors the situation around the combine harvester 1, and may be, for example, a camera, an ultrasonic sensor, a radar, a light detection and ranging (LiDAR), or the like. The lifting/lowering sensor is a sensor that detects a lifting/lowering amount of the reaping part 3, and is, for example, the above-described potentiometer or the like. The ground height sensor is a sensor that detects the height of the reaping part 3 with respect to the ground 200 (see Fig. 4), and corresponds to a skid sensor 521 illustrated in Fig. 2 in the present embodiment.

That is, the combine harvester 1 of the present embodiment includes the skid sensor 521 that detects the ground height of the reaping part 3. The skid sensor 521 has a wide-plate shape extending in the left-right direction, and protrudes rearward and downward at a lower portion of the reaping part 3. The skid sensor 521 is configured to be rotatable about a front upper end portion. When the skid sensor 521 is swung in contact with the ground 200 by lowering of the reaping part 3, the height of the reaping part 3 with respect to the ground 200 is detected according to the amount of the swinging. Note that the combine harvester 1 may include only one skid sensor 521 or a plurality of skid sensors. In a case where the combine harvester 1 includes a plurality of skid sensors 521, the plurality of skid sensors 521 may be arranged in the left-right direction.

An operation device 53 enables an operator who operates the combine harvester 1 to issue a command to the control device 30. The operator may be a person who gets on the combine harvester 1 or a person who does not get on the combine harvester 1. The operation device 53 may be provided, for example, in at least one of the combine harvester 1 and the terminal device (for example, a tablet terminal or the like). The operation device 53 may be, for example, a button, a lever, a dial, a touch panel, or the like. The operation device 53 may be a hardware switch or may be a software switch.

A notification device 54 appropriately notifies information in accordance with the command from the control device 30. The information is notified to the operator or the like. The notification device 54 is, for example, a display device such as a liquid crystal display or an organic EL display, or an audio output device. In a case where the notification device 54 is a display device, as a configuration in which the display device includes a touch panel, the display device may also serve as the above-described operation device 53. The notification device 54 may be provided, for example, in at least one of the combine harvester 1 and the terminal device (a tablet terminal or the like).

Next, an outline of the functional parts 32 to 36 of the control device 30 illustrated in Fig. 5 will be described.

The route generating part 32 generates a travel route for causing the combine harvester 1 to automatically travel. The route generating part 32 generates a travel route on the basis of, for example, information (work vehicle information) regarding the combine harvester 1 input by the operator using the operation device 53 and information (field information) regarding a field in which work is performed.

Note that the work vehicle information includes, for example, information such as the type of the combine harvester 1, the position where the positioning antenna is attached in the combine harvester 1, the type of the work machine, the size and shape of the work machine, the position of the work machine with respect to the combine harvester 1, and the vehicle speed (work vehicle speed, non-work vehicle speed, turning vehicle speed, and the like) and the engine speed of the combine harvester 1.

In addition, examples of the field information include information such as the position and shape of the field F, a travel start position S at which work starts, a travel end position G at which work ends (see Fig. 6 to be described later), and a work direction. Note that the work direction means the direction in which the combine harvester 1 travels while the reaping part 3 is working in the work area F1 excluding the non-work area from the field F. Furthermore, for at least part of the information of the field information, past record information stored in the storage part 31 may be used.

The travel mode control part 33 performs control to switch between a manual travel mode and an automatic travel mode. Switching between the manual travel mode and the automatic travel mode is performed, for example, in accordance with an instruction from the operator using the operation device 53. Note that switching from the automatic travel mode to the manual travel mode may be automatically performed in an emergency or the like.

In the manual travel mode, a travel operation of the combine harvester 1 is performed by an operation of the operator. Note that the manual operation by the operator may be an operation performed by the operator boarding the steering part 9 or an operation performed by the operator using a remote operation device (for example, the terminal device such as the tablet terminal described above) without boarding the steering part 9. In the automatic travel mode, as described above, at least the steering control in traveling system control of the combine harvester 1 is automatically performed. That is, in the automatic travel mode, the operator does not need to perform at least a steering wheel operation. Note that, in the automatic travel mode, the operator may board or may not board the steering part 9.

The travel control part 34 controls a traveling system of the combine harvester 1 in accordance with the travel mode. In a case where the travel mode is the manual travel mode, the travel control part 34 controls the traveling system of the combine harvester 1 in accordance with an instruction from the operation device 53. In a case where the travel mode is the automatic travel mode, the travel control part 34 automatically controls at least steering in the traveling system control of the combine harvester 1. The travel control part 34 performs steering control such that the combine harvester 1 travels along the travel route generated by the route generating part 32 at the time of automatic control of steering (automatic steering). At the time of automatic steering, for example, the position and orientation of the combine harvester 1 are obtained on the basis of information obtained from the positioning unit 51 and the inertial measurement device included in the detection device 52. Then, calculation related to automatic steering is executed according to a positional relationship between the obtained position of the combine harvester 1 or the like and the travel route generated by the route generating part 32, and steering control according to the calculation result is executed.

The work machine control part 35 controls each part including the reaping part 3 for the combine harvester 1 to perform work. The work machine control part 35 performs control of each part manually or automatically according to a preset setting condition. In the present embodiment, automatic control is executed for the reaping part 3. Details of the automatic control of the reaping part 3 will be described later.

The notification control part 36 controls the notification device 54 to appropriately notify the operator who gets on the combine harvester 1 or the operator who operates the combine harvester 1 from the outside of information regarding the combine harvester 1.

### [1-3. Outline of automatic travel]

Fig. 6 is a diagram illustrating an outline of a travel route R generated by the route generating part 32. The travel route R illustrated in Fig. 6 is generated on the assumption that the combine harvester 1 performs work on the field F. More specifically, the travel route R illustrated in Fig. 6 is generated on the assumption that reaping work using the reaping part 3 is performed in the work area F1 in which a reaping target in the field F is planted. The travel route R includes a work route R1 that causes the combine harvester 1 to travel straight while causing the combine harvester 1 to perform work, and a non-work route R2 that connects the work routes R1 and on which non-work travel is performed.

In the example illustrated in Fig. 6, the combine harvester 1 starts automatic travel from the travel start position S, travels on the non-work route (movement route) R2 to enter the work area F1, and performs reaping work while traveling on the first work route R1. When finishing the reaping work on the first work route R1, the combine harvester 1 travels on the non-work route R2 outside the work area F1 (headland area) and moves to the second work route R1 to perform the reaping work. The combine harvester 1 performs the reaping work in the work area F1 while repeating reaping work on the work route R1 and moving travel on the non-work route R2. When finishing the reaping work on all the work routes R1 within the work area F1, the combine harvester 1 travels on the non-work route R2 to move to the travel end position G. In this way, the combine harvester 1 automatically travels along the travel route R, and performs reaping work along each work route R1 in sequence.

### <2. Details of harvest work by automatic travel>

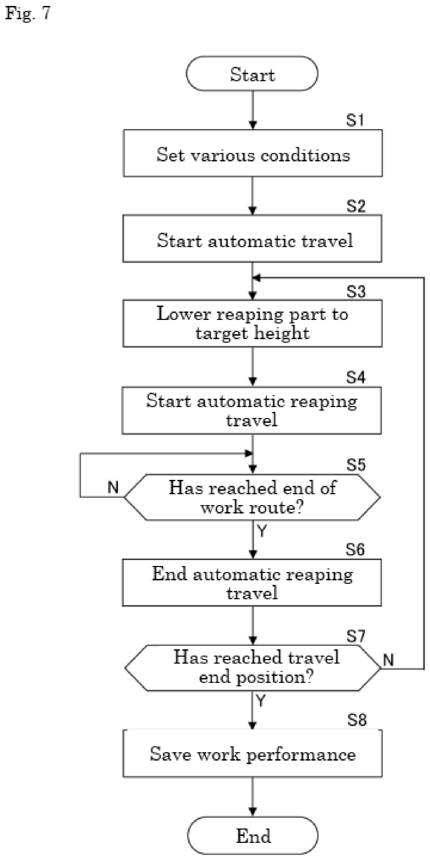

Fig. 7 is a flowchart illustrating a flow of harvest work by the automatic travel executed in the work system 100. Specifically, the processing illustrated in Fig. 7 is executed by the control device 30. The processing illustrated in Fig. 7 is executed in a case where the automatic travel mode is selected as the travel mode.

Note that harvest work processing illustrated in Fig. 7 includes technical contents of the work method of the present invention and a computer program for causing a computer to implement the work method of the present invention. In addition, the execution order of each step illustrated in Fig. 7 may be changed within a range in which similar operational effects are produced.

In step S1, the control device 30 executes various condition settings necessary for starting the harvest work by automatic travel in the field. The various settings include generation and setting of a travel route by the route generating part 32 described above. In addition, the various settings also include the setting of the vehicle speed of the combine harvester 1, the setting of the work machine, and the like. The setting of the work machine includes setting of the reaping height of the reaping part 3, setting of the rotation speed of the raking reel 14, and the like.

In performing various settings, the control device 30 appropriately reads data from the storage part 31, requests the operator to input conditions, requests a server to transmit information such as a work plan and work performance, or the like. For example, the work performance information may include a position and a period of work, a type of work (ridging, seeding, and the like), and the like. The control device 30 performs various settings on the basis of the information acquired from the storage part 31 or the like. Note that the server may execute at least one of the various settings. When various settings are completed, the control device 30 advances the processing to the next step S2.

In step S2, the control device 30 (travel control part 34) causes the combine harvester 1 to start automatic travel. Specifically, in a case where the combine harvester 1 satisfies an automatic travel start condition, the control device 30 causes the combine harvester 1 to automatically travel along the travel route R generated by the route generating part 32. When the automatic travel start processing is completed, the control device 30 advances the processing to the next step S3.

In step S3, the control device 30 (work machine control part 35) lowers the reaping part 3 to a preset target height (work position) at an appropriate timing. The target height is determined such that the reaping part 3 has a height suitable for the reaping work, and for example, a tip position of the divider 13, the position of the reaping blade 15, and the like are set to the target height. The appropriate timing is preferably, for example, before the host vehicle (combine harvester 1) reaches the work area F1 (see Fig. 6). The lowering of the reaping part 3 to the target height is more preferably completed when the combine harvester 1 reaches the work area F1. As a result, the combine harvester 1 can smoothly start the automatic reaping travel. Note that the automatic reaping travel refers to a state in which the combine harvester 1 automatically travels while executing the reaping work by the reaping part 3.

For example, the control device 30 lowers the reaping part 3 such that the height calculated by the lifting/lowering amount (height variation amount) measured by the lifting/lowering sensor described above reaches the target height with reference to the height of the non-work position of the reaping part 3 (height from crawler lower end which is a known height) measured at the time of factory shipment or the like. For example, in a case where the height of the non-work position is 100 cm and the target height is 10 cm, the height reaches the target height when a height variation of 90 cm is detected by the lifting/lowering sensor from the start of lowering. When the lowering processing of the reaping part 3 is completed, the control device 30 advances the processing to the next step S4.

In step S4, the control device 30 (travel control part 34 and work machine control part 35) causes the combine harvester 1 to start automatic reaping travel. Specifically, when the travel position of the combine harvester 1 traveling in the non-work area of the field F reaches the work area F1 (one end of the linear work route R1, for example, corresponding to a point P1 in Fig. 6) or a predetermined position before the work area F1, the control device 30 sets the speed of the combine harvester 1 to a speed suitable for the reaping work. In addition, when the travel position of the combine harvester 1 reaches the work area F1 (one end of the linear work route R1, for example, corresponding to the point P1 in Fig. 6), the control device 30 starts reaping work using the reaping part 3. At the start of the reaping work, specifically, the control device 30 starts driving of the raking reel 14, the reaping blade 15, the raking auger 16, the conveyance conveyor 18, and the like of the reaping part 3. When the start processing of the automatic reaping travel is completed, the control device 30 advances the processing to the next step S5.

Note that, in the present embodiment, during the automatic reaping travel, the combine harvester 1 executes height control based on the detection result of the skid sensor 521 (detection result of ground height) for the height position of the reaping part 3. In the height control, the ground height of the reaping part 3 is set to a preset target ground height. The height control based on the skid sensor 521 may be started at the same time as the start of the automatic reaping travel, or may be started before the start of the automatic reaping travel. However, the height control based on the skid sensor 521 is preferably performed after the above-described lowering of the reaping part 3 to the target height is completed.

That is, in the work method of performing the harvest work by the combine harvester (work vehicle) 1, after the reaping part (work machine) 3 that performs the harvest work is lowered to the target height, the height control of the reaping part (work machine) 3 based on the detection result of the skid sensor (ground height detection device) 521 is started at a predetermined timing. By starting the height control of the reaping part 3 based on the detection result of the skid sensor 521 capable of detecting the ground height, the influence of the height variation of the ground 200 can be suppressed and reaping work can be appropriately performed. Then, the reaping part 3 is lowered to the target height first, and then the height control based on the skid sensor 521 is started, thereby the height control using the skid sensor 521 can be smoothly started.

The predetermined timing may be a timing at which the host vehicle (combine harvester 1) travels a predetermined distance or a predetermined time after lowering the reaping part (work machine) 3 to the target height, or a timing at which the host vehicle reaches a target position on the travel route R for automatic travel. The predetermined distance and the predetermined time may be, for example, a distance and time required for the combine harvester 1 that automatically travels in the non-work area along the travel route R to reach the work area F1 (one end of the linear work route R1, for example, corresponding to the point P1 in Fig. 6) or a predetermined point before the work area F1. In this case, the predetermined distance and the predetermined time may be obtained on the basis of a target arrival point (point P1 or a predetermined point before point P1) and the vehicle speed set in the combine harvester 1 or the actual vehicle speed of the combine harvester 1. In addition, the target position on the travel route R may be a work start point (for example, corresponding to P1 in Fig. 6) which is one end of the linear work route R1, or a predetermined point before the work start point.

Note that, in the above description, the height control of the reaping part 3 during the automatic reaping travel is performed using the ground height detection device (specific example is the skid sensor 521) that detects the ground height, but this is an example. For example, the height control of the reaping part (work machine) 3 based on the detection result of a crop height detection device that detects the height position of the crop to be subjected to the reaping work (harvest work) may be started after the reaping part (work machine) 3 is lowered to the target height. With such a configuration, since the reaping height can be appropriately set according to the actual height of the crop, the reaping work can be appropriately performed. The crop height detection device may be, for example, a camera or the like.

In step S5, the control device 30 (travel control part 34 and work machine control part 35) determines whether or not the combine harvester 1 has reached the end of the work route R1 (for example, corresponding to a point P2 in Fig. 6). When determining that the combine harvester 1 has reached the end of the work route R1 (Yes in step S5), the control device 30 advances the processing to the next step S6. On the other hand, when determining that the combine harvester 1 has not reached the end of the work route R1 (No in step S5), the control device 30 repeats the processing of step S5. During this period, the control device 30 causes the combine harvester 1 to continue the automatic reaping travel.

In step S6, the control device 30 (travel control part 34 and work machine control part 35) causes the combine harvester 1 to end the automatic reaping travel. Specifically, the control device 30 stops driving of the reaping part 3 and the like and causes the reaping part 3 to be lifted to the non-work position. The non-work position may be, for example, the uppermost position of the reaping part 3. In addition, the control device 30 changes the vehicle speed of the combine harvester 1 to a speed suitable for traveling on the non-work route R2, and causes the combine harvester 1 to automatically travel along the non-work route R2. When causing the combine harvester 1 to end the automatic reaping travel, the control device 30 advances the processing to the next step S7.

In step S7, the control device 30 (travel control part 34 and work machine control part 35) determines whether or not the combine harvester 1 reaches the travel end position G at which the automatic travel is ended by the current travel on the non-work route R2. Note that the travel end position G is set when the travel route R is generated (see Fig. 6). In a case of determining that the combine harvester 1 reaches the travel end position G (Yes in step S7), the control device 30 advances the processing to the next step S8. In a case of determining that the combine harvester 1 does not reach the travel end position G (No in step S7), the control device 30 returns the processing to step S3 described above and executes the processing of step S3 and subsequent steps.

In step S8, after causing the automatic travel to end, the control device 30 performs processing for saving the work performance of the harvest work by the current automatic travel. The saving of the work performance may be performed, for example, by storing the work performance in the storage part 31 or by uploading the work performance to the server. The work performance may include a travel history of the combine harvester 1, a history of a vehicle speed of the combine harvester 1, an operation history of the reaping part 3 (history of a rotation speed and a reaping height), trouble information, and the like. By saving the work performance in this manner, it is possible to utilize the work performance at the time of the next work. When the saving processing of the work performance is completed, the control device 30 ends the flow illustrated in Fig. 7.

### <3. Details of processing related to height setting of work machine>

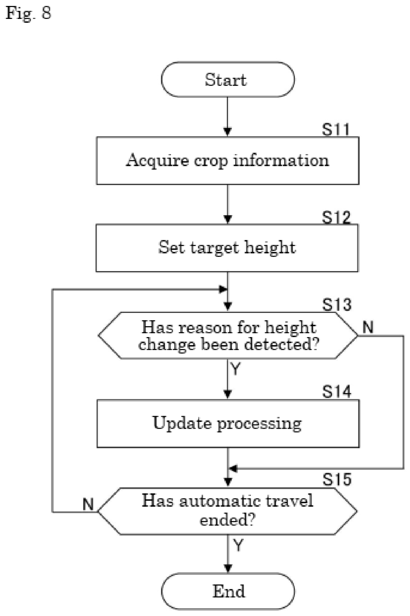

Fig. 8 is a flowchart illustrating a flow of processing executed in the work system 100 and related to height setting of the reaping part (work machine) 3. Specifically, the processing illustrated in Fig. 8 is executed by the control device 30. The processing illustrated in Fig. 8 is executed, for example, in a case where the automatic travel mode is selected as the travel mode.

Note that processing related to the height setting of the reaping part 3 illustrated in Fig. 8 includes technical contents of the work method of the present invention and a computer program for causing a computer to implement the work method of the present invention. In addition, the execution order of each step illustrated in Fig. 8 may be changed within a range in which similar operational effects are produced.

In step S11, the control device 30 (work machine control part 35) acquires crop information that is information regarding a crop (grain) to be subjected to harvest work (reaping work). The crop information may include, for example, information on the type of crop, information on the height of the ridge where the crop is planted, information on the height of the planted crop, work performance information on the crop, work plan information on the crop, or the like. Although the crop information may be a single piece of information, it may be a plurality of pieces of information. The crop information may be acquired by using, for example, reading of data from the storage part 31, downloading of data from the server, an input request to the operator, imaging information on a camera, or the like. Note that the camera may be a camera mounted on a drone, in addition to the camera mounted on the combine harvester 1. When acquiring the crop information, the control device 30 advances the processing to the next step S12.

In step S12, the control device 30 (work machine control part 35) sets a target height at the time of lowering the reaping part 3 from the non-work position to the work position on the basis of the previously acquired crop information. That is, the work method of the present embodiment executes automatic setting of the target height at the time of lowering the reaping part 3 from the non-work position to the work position on the basis of the previously acquired crop information. In addition, a program for causing a computer to execute the work method of the present embodiment causes the computer to function as means for executing setting of the target height at the time of lowering the reaping part 3 from the non-work position to the work position on the basis of the previously acquired crop information.

According to the configuration of the present embodiment, since the target height of the reaping part (work machine) 3 is set on the basis of the crop information regarding the crop to be reaped (harvested), the reaping part 3 can be set to an appropriate height according to the target crop, and reaping work (harvest work) can be appropriately performed. Furthermore, according to the configuration of the present embodiment, since the target height of the reaping part 3 is automatically set, it is possible to reduce the work load of a user such as the operator and improve the work efficiency.

For example, the control device 30 may be configured to set the target height for each type of crop. With such a configuration, since the reaping part 3 can be set to an appropriate reaping height according to the target crop, the reaping work can be appropriately performed. The type of crop may be, for example, input by the operator, acquired from the imaging information captured by the camera mounted on the combine harvester 1, or the like. Examples of the type of crop include, for example, soybean, corn, wheat, and rice, and the target height may be set according to the type of crop. For example, corn is at a high position away from the root, and the target height may be set at a position higher than the soybean or the like in accordance with such a characteristic. The target height for each type of crop may be stored in the storage part 31 in the form of a data table, for example.

In addition, the control device 30 may be configured to set the target height on the basis of the height of the ridge where the crop is planted. In such a configuration, for example, the height of the ridge can be set to the target height, and the reaping part 3 can be set at a position suitable for reaping the crop from the root. However, the target height is not limited to the height of the ridge, and may be a height obtained by adding a predetermined height to the height of the ridge. The predetermined height may be determined for each type of crop, for example. That is, the target height may be set on the basis of the height of the ridge and the type of the crop. The height of the ridge may be input by the operator, obtained from the imaging information on a camera or a detection value of a sensor, obtained from work information at the time of ridging or seeding work, or the like.

Furthermore, the control device 30 may be configured to set the target height on the basis of the height of the crop planted in the field. In such a configuration, reaping work can be appropriately performed even when the height of the crop varies. The height of the crop may be obtained, for example, from the imaging information on a camera or a detection value of a sensor.

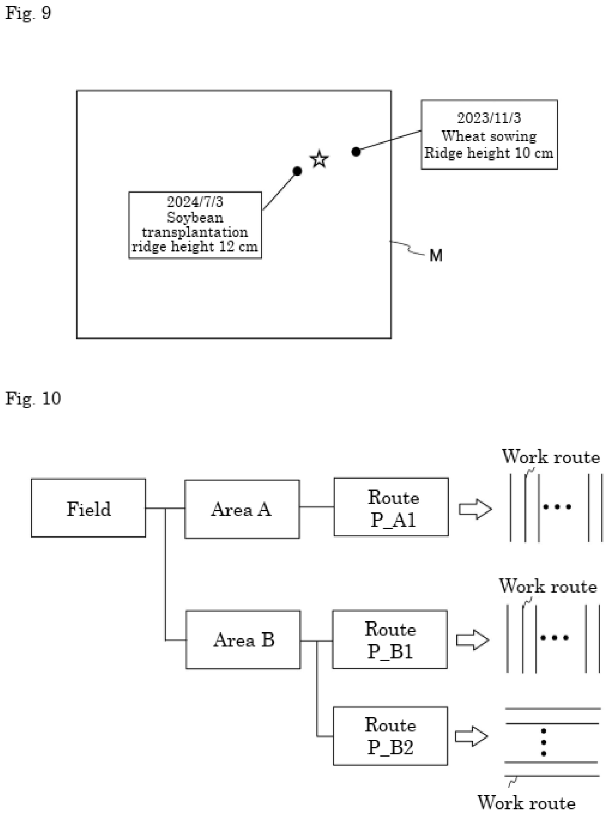

In addition, the control device 30 may be configured to set the target height on the basis of work information such as a work plan and work performance saved in a server or the like. This will be described with reference to Fig. 9. Fig. 9 is a diagram schematically illustrating the work performance information. Note that, in Fig. 9, although the work information is the work performance information, a similar configuration can be assumed even in a case where the work information is work plan information.

In Fig. 9, reference numeral M denotes a map including position information. In addition, a star indicates the current position of the combine harvester 1. A black circle indicates a place where the work performance information is collected. The work performance information includes, for example, position information on which work has been performed, date information on which work has been performed, information on a type of crop, information on work content, information on a field (information on ridge height and the like), route information at the time of work, vehicle speed information at the time of work, and the like. Note that Fig. 9 illustrates only a part of the work performance information.

For example, the control device 30 may be configured to compare the information on the host vehicle position and on the crop to be reaped with the work performance information illustrated in Fig. 9 and automatically set the target height suitable for the current work. In the case of this configuration, for example, the control device 30 may set the target height on the basis of the latest work performance information that is closest to the host vehicle position and matches the crop scheduled to be worked. Furthermore, as another example, the control device 30 may be configured to display the acquired work performance information on a screen (center meter or the like) provided in the tablet terminal or the combine harvester 1, and cause the operator to select the work performance information to be used for setting the target height.

After setting the target height, the control device 30 advances the processing to the next step S13. Note that the processing of step S11 and step S12 described above corresponds to a part of the processing of step S1 in Fig. 7 described above. Furthermore, in a case where the reaping part 3 is automatically set to the target height, the skid sensor 521, which is a ground height sensor, may detect a height outside an assumed range (assumed range needs to be set in advance) for a reason that the target height is not appropriate or the like. In such a case, for example, an error may be displayed to the operator using the notification device 54 regarding the setting of the target height of the reaping part 3, and the operation of setting the reaping part 3 to the target height may be cancelled.

In step S13, the control device 30 (work machine control part 35) determines whether or not a reason for changing the target height has been detected. Note that, after setting the target height, as described above, the combine harvester 1 performs reaping work by automatic travel (automatic reaping travel). The reason for changing the target height is detected, for example, in a case where the operator manually changes the height after setting the reaping part 3 to the target height. In addition, the reason for changing the target height is detected in a case where it is determined that the height of the reaping part 3 has been changed on the basis of the height detection result of the skid sensor 521, which is a ground height sensor, during the automatic reaping travel. When it is detected that the height of the reaping part 3 has been changed from the target height, it may be immediately determined that the height of the reaping part 3 has been changed. However, in a case where it is determined that the height of the reaping part 3 has been changed from the target height by a predetermined time or more or a predetermined travel distance or more, it is preferable to determine that the height of the reaping part 3 has been changed. In a case where it is determined that the average value of the heights of the reaping part 3 when the combine harvester 1 has traveled a predetermined distance or a predetermined time has been changed from the target height, it is preferable to determine that the height of the reaping part 3 has been changed. In this case, the average value may be set as the height after the change of the reaping part 3. In addition, in such a configuration for obtaining the average value, it is preferable to use data in a section or a time interval in which the height variation of the skid sensor 521 is small, and it is preferable that the determination of the height change of the reaping part 3 is not executed in a state in which the height variation exceeds a predetermined range. In a case of detecting the reason for changing the target height (Yes in step S13), the control device 30 advances the processing to the next step S14. In a case of not detecting the reason for changing the target height (No in step S13), the control device 30 advances the processing to step S15.

In step S14, the control device 30 (work machine control part 35) updates the information used for setting the target height on the basis of the height after the change. The update of the information used for setting the target height may be, for example, update of the target height set for each type of crop (update of table data). In addition, the update of the information used for setting the target height may be the update of the ridge height information or the update of the information used for setting the target height in the work plan or the work performance. After performing the update processing of the information used for setting the target height, the control device 30 advances the processing to the next step S15.

In step S15, the control device 30 (work machine control part 35) determines whether or not to end the automatic travel of the combine harvester 1 for performing the harvest work. The automatic travel is ended, for example, in a case where the travel end position G (see Fig. 6) of the travel route R is reached, in a case where an instruction to end the automatic travel is given from the operator, or the like. In a case of ending the automatic travel (Yes in step S15), the control device 30 ends the processing illustrated in Fig. 8. In a case of not ending the automatic travel (No in step S15), the control device 30 returns to step S13 and performs the processing of step S13 and subsequent steps.

As described above, in the work method of the present embodiment, in a case where the reason for changing the target height is detected during the period from the setting of the target height to the end of the automatic travel of the combine harvester 1, the information used for setting the target height is updated. According to such a configuration, since the information used for setting the target height is updated according to the situation of the actual work, the reaping work can be appropriately performed in the work after the information update or the opportunity of the next harvest work.

### <4. Modification>

In the embodiment described above, the target height at the time of lowering the reaping part 3 (work machine) that performs the reaping work (harvest work) from the non-work position to the work position is automatically set on the basis of the crop information that is the information regarding the crop to be reaped (to be harvested). However, instead of this configuration, the target height may be automatically set on the basis of area information that is information on an area set in the field where the reaping work (harvest work) is performed or route information that is information on a route (route for harvest work) set in the field where the reaping work (harvest work) is performed. Even in such a configuration, since the target height of the reaping part 3 (work machine) is automatically set, it is possible to reduce the work load of a user such as the operator and improve the work efficiency.

Hereinafter, a specific example will be described, but before that, an area and a route set in the field in a modification will be described with reference to Fig. 10. Fig. 10 is a diagram for describing an area and a route set in the field in the modification.

As illustrated in Fig. 10, in the modification, an area can be set for the field. The setting of the area (area setting) for the field may be executed by the operator using the operation device 53, for example. However, the area setting may be automatically set by the control device 30. In the example illustrated in Fig. 10, two areas of an area A and an area B are set for the field. For example, such area setting is performed in a case where it is desired to provide a place where soybean and wheat are grown separately in the field, a case where the direction of work (the direction in which the linear work route extends) is changed and set according to the place, and the like.

Note that the number of set areas for the field may be three or more. In addition, the number of set areas for the field may be one, and in such a case, a case where the area and the field are the same may be included. However, a configuration in which the area and the field are the same may be treated as not setting the area, and in such a case, setting of a route described below may be appropriately performed without setting the area.

Furthermore, in the modification, at least one route pattern (illustrated as route P in the drawing) can be set for each area. As illustrated in Fig. 10, each route pattern includes a plurality of work routes for causing the combine harvester 1 to travel straight while causing the combine harvester 1 to work. That is, each route pattern includes a work route group that is a collection of a plurality of work routes. In a state in which a plurality of route patterns is set in the area, at the time of actually performing the work, one route pattern is selected from the set plurality of route patterns and the work is performed. For example, in a certain area, in a case where it is desired to change the direction of work (change the direction in which the work route extends) every year, a plurality of route patterns is set for one area.

In the example illustrated in Fig. 10, one route pattern (route P) A1 is set in the area A, and two route patterns (routes P) B1 and B2 are set in the area B. The route pattern B1 and the route pattern B2 set in the area B are different in the direction of the work route. Specifically, in the route pattern B1, the work route extends in the up-down direction in Fig. 10, and in the route pattern B2, the work route extends in the left-right direction in Fig. 10.

In the modification, when performing reaping work by the combine harvester 1, the control device 30 (route generating part 32) selects an area and a route pattern on the basis of, for example, an operator's command, a work plan, past work performance, or the like. Then, the control device 30 (route generating part 32) generates a travel route on which automatic travel is performed according to the selected result.

### (4-1. First specific example)

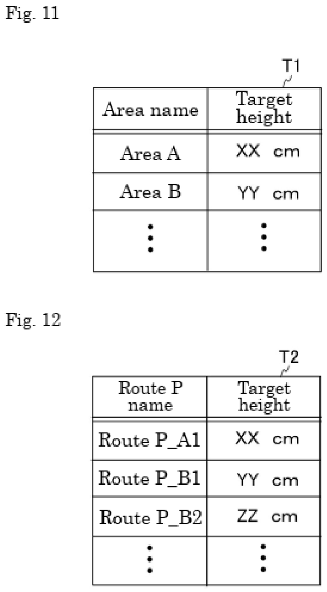

In a first example, the target height at the time of lowering the reaping part 3 that performs reaping work from the non-work position to the work position is automatically set on the basis of area information that is information on an area set in the field. Fig. 11 is a table T1 in which a name of the area is associated with the target height. The table T1 is an example of the area information and is stored in the storage part 31.

When starting automatic reaping travel, the control device 30 included in the combine harvester 1 determines a target height of the reaping part 3 on the basis of the name of the area subjected to reaping work and the table T1, and automatically sets the reaping part 3 to the determined target height. In the configuration using the table T1 illustrated in Fig. 11, for example, in a case where the area subjected to reaping work is the area A, the control device 30 automatically sets the reaping part 3 to XX cm. Furthermore, for example, in a case where the area subjected to reaping work is the area B, the control device 30 automatically sets the reaping part 3 to YY cm. Note that, in the example illustrated in Fig. 10, the area B includes two route patterns of the route pattern B1 and the route pattern B2. Since the target height is set for the area B, the target height is set to YY cm regardless of which of the two route patterns is selected.

Note that, for example, the table T1 may be created by manual input by the operator, or automatically created by the control device 30 on the basis of a work plan or work performance stored in the storage part 31 or the like.

### (4-2. Second specific example)

In a second example, the target height at the time of lowering the reaping part 3 that performs reaping work from the non-work position to the work position is automatically set on the basis of route information that is information on a route set in the field. More specifically, the target height is automatically set on the basis of the information regarding the route pattern set in the field. Fig. 12 is a table T2 in which the name of the route pattern is associated with the target height. The table T1 is an example of information regarding the route pattern (route information), and is stored in the storage part 31.

When starting automatic reaping travel, the control device 30 included in the combine harvester 1 determines a target height of the reaping part 3 on the basis of the name of the route pattern subjected to reaping work and the table T2, and automatically sets the reaping part 3 to the determined target height. In the configuration using the table T2 illustrated in Fig. 12, for example, in a case where the name of the route pattern subjected to reaping work is the route pattern B2, the control device 30 automatically sets the reaping part 3 to ZZ cm.

Note that, for example, the table T2 may be created by manual input by the operator, or automatically created by the control device 30 on the basis of a work plan or work performance stored in the storage part 31 or the like.

### (4-3. Third specific example)

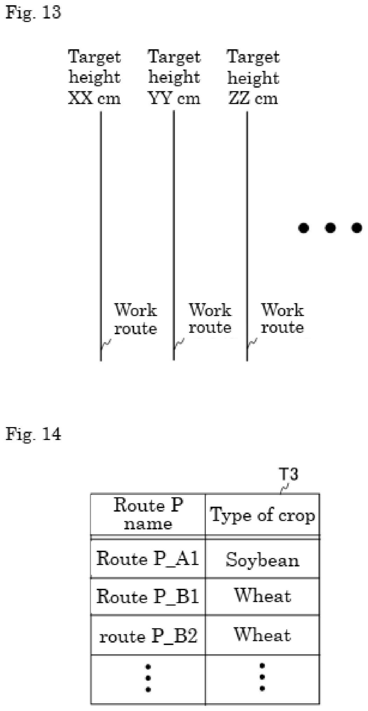

In a third example, the target height at the time of lowering the reaping part 3 that performs reaping work from the non-work position to the work position is automatically set on the basis of route information that is information on a route set in the field. More specifically, the target height is automatically set on the basis of the information regarding the work route (straight route as a detailed example) set in the field. Fig. 13 is a diagram for describing information regarding the work route. As illustrated in Fig. 13, the information regarding the work route is given as information including a target height (target height of the reaping part 3) set for each work route (for one work route). As a detailed example of such information, there is a table in which a name of the work route is associated with the target height.

When starting automatic reaping travel, the control device 30 included in the combine harvester 1 determines a target height of the reaping part 3 on the basis of the name of the work route subjected to reaping work and the table in which the work route is associated with the target height, and automatically sets the reaping part 3 to the determined target height. In the example illustrated in Fig. 13, in a case where the work route on the leftmost side is a work route subjected to the automatic reaping travel, the control device 30 automatically sets the reaping part 3 to XX cm to start the automatic reaping travel. Then, after the automatic reaping travel of the work route is finished and before the automatic reaping travel of the next work route (corresponds to work route on the right side in this example) is started, the control device 30 automatically sets the reaping part 3 to YY cm to start the automatic reaping travel.

Note that, for example, the table in which the work route is associated with the target height may be created by manual input by the operator, or automatically created by the control device 30 on the basis of a work plan or work performance stored in the storage part 31 or the like.

### (4-4. Fourth specific example)

In the first to third specific examples described above, the area information and the route information include the target height, but the type of crops subjected to reaping work may be included instead of the target height.

Fig. 14 is a diagram illustrating a table T3 in which a name of the route pattern is associated with the type of the crop. In this example, although the name of the route pattern is associated with the type of the crop, instead of this, the name of the area may be associated with the type of the crop, or the name of the work route may be associated with the type of the crop.

In the example illustrated in Fig. 14, when starting automatic reaping travel, the control device 30 included in the combine harvester 1 determines the type of the crop to be reaped on the basis of the name of the route pattern subjected to reaping work and the table T3. The control device 30 determines the target height of the reaping part 3 on the basis of the type of the crop, and automatically sets the reaping part 3 to the determined target height.

In the configuration using the table T3 illustrated in Fig. 14, for example, in a case where the name of the route pattern subjected to reaping work is the route pattern B1, the control device 30 automatically determines the type of the crop subjected to reaping work as wheat. Then, the control device 30 determines the target height of the reaping part 3 on the basis of, for example, the determined type of the crop (wheat) and a table (not illustrated) in which the type of the crop is associated with the target height, and automatically sets the height of the reaping part 3 to the determined target height.

### <5. Points to be noted>

Various changes can be made to various technical features disclosed herein without departing from the spirit of the technical creation. In addition, a plurality of embodiments, examples, and modifications described herein may be implemented in combination to the extent possible.

For example, in addition to automatically setting a target height at the time of lowering the work machine that performs harvest work from the non-work position to the work position on the basis of the crop information, the area information, or the route information, the target height may be manually set by a user such as an operator. Then, whether to set the target height automatically or manually may be selectable by the user.

### <6. Supplementary notes>

An exemplary work method of the present invention may be a work method for performing harvest work by a work vehicle, including executing automatic setting of a target height at the time of lowering a work machine that performs the harvest work from a non-work position to a work position on the basis of crop information that is information regarding a crop subjected to the harvest work, area information that is information on an area set in a field in which the harvest work is performed, or route information that is information on a route set in the field (first configuration).

In the work method of the first configuration, the crop information may include information on a type of a crop, and the target height may be set for each type of the crop (second configuration).

In the work method of the first configuration, the crop information may include information on a height of a ridge where a crop is planted, and the target height may be set on the basis of the height of the ridge (third configuration).

The work method of any one of the first to third configurations may further include, in a case where a reason for changing the target height is detected during a period from setting of the target height to end of automatic travel of the work vehicle, executing update of information used for setting the target height (fourth configuration).

The work method of any one of the first to fourth configurations may further include executing start of height control of the work machine on the basis of a detection result of a ground height detection device that detects a ground height of the work machine at a predetermined timing after lowering the work machine to the target height (fifth configuration).

In the work method of the fifth configuration, the predetermined timing may be a timing at which the work vehicle travels a predetermined distance or a predetermined time after lowering the work machine to the target height, or a timing at which the work vehicle reaches a target position on a travel route for automatic travel (sixth configuration).

The work method of any one of the first to fourth configurations may further include executing start of height control of the work machine on the basis of a detection result of a crop height detection device that detects a height position of a crop subjected to the harvest work after lowering the work machine to the target height (seventh configuration).

### LIST OF REFERENCE SIGNS

- 1: Combine harvester (work vehicle)
- 3: Reaping part (work machine)
- 30: Control device
- 100: Work system
- 521: Skid sensor (ground height detection device)
- R: Travel route

## Claims

1. A work method for performing harvest work by a work vehicle, the work method comprising
executing automatic setting of a target height at a time of lowering a work machine that performs the harvest work from a non-work position to a work position on a basis of crop information that is information regarding a crop subjected to the harvest work, area information that is information on an area set in a field in which the harvest work is performed, or route information that is information on a route set in the field.

2. The work method according to claim 1, wherein the crop information includes information on a type of a crop, and
the target height is set for each type of the crop.

3. The work method according to claim **1,** wherein the crop information includes information on a height of a ridge where a crop is planted, and
the target height is set on a basis of the height of the ridge.

4. The work method according to claim 1, further comprising, in a case where a reason for changing the target height is detected during a period from setting of the target height to end of automatic travel of the work vehicle, executing update of information used for setting the target height.

5. The work method according to any one of claims 1 to 4, further comprising executing start of height control of the work machine on a basis of a detection result of a ground height detection device that detects a ground height of the work machine at a predetermined timing after lowering the work machine to the target height.

6. The work method according to claim 5, wherein the predetermined timing is a timing at which the work vehicle travels a predetermined distance or a predetermined time after lowering the work machine to the target height, or a timing at which the work vehicle reaches a target position on a travel route for automatic travel.

7. The work method according to any one of claims 1 to 4, further comprising executing start of height control of the work machine on a basis of a detection result of a crop height detection device that detects a height position of a crop subjected to the harvest work after lowering the work machine to the target height.

8. A work system comprising:
a work vehicle including a work machine that performs harvest work; and
a control device that controls the work machine, wherein
the control device sets a target height at a time of lowering the work machine from a non-work position to a work position on a basis of crop information that is information regarding a crop subjected to the harvest work, area information that is information on an area set in a field in which the harvest work is performed, or route information that is information on a route set in the field.

9. A program for causing a computer to execute a work method for performing harvest work by a work vehicle,
the program causing the computer to function as means for
executing setting of a target height at a time of lowering a work machine that performs the harvest work from a non-work position to a work position on a basis of crop information that is information regarding a crop subjected to the harvest work, area information that is information on an area set in a field in which the harvest work is performed, or route information that is information on a route set in the field.
